(19) Europäisches Patentamt
European Patent Office
Office européen des brevets

(11) Publication number: **0 142 228 A1**

# (12) EUROPEAN PATENT APPLICATION

(21) Application number: 84305770.4

(22) Date of filing: 23.08.84

(51) Int. Cl.⁴: C 08 G 18/67
C 08 G 18/44, C 08 G 18/66
C 09 J 3/16, B 32 B 17/10

(30) Priority: 31.08.83 JP 158071/83

(43) Date of publication of application:
22.05.85 Bulletin 85/21

(84) Designated Contracting States:
DE GB

(71) Applicant: NEGAMI CHEMICAL INDUSTRIAL CO LTD
Ro-22, Dorincho Neagari-machi
Nomi-gun Ishikawa-ken, 929-01(JP)

(71) Applicant: TOSHIBA SILICONE CO LTD
2-31, Roppongi 6-chome Minato-ku
Tokyo 106(JP)

(72) Inventor: Sugano, Shunji c/o Negami Chemical Ind. Co Ltd
Ro-22, Dorincho Neagari-machi
Nomi-gun Ishikawa-ken, 929-01(JP)

(72) Inventor: Hagiwara, Koichi c/o Negami Chemical Ind. Co Ltd
Ro 22, Dorincho Neagari-machi
Nomi-gun Ishikawa-ken, 929-01(JP)

(72) Inventor: Miura, Isao Toshiba Silicone Co Ltd
2-31, Roppongi 6-chome Minato-ku
Tokyo 106(JP)

(72) Inventor: Honto, Akira c/o Toshiba Silicone Co Ltd
2-31, Roppongi 6-chome Minato-ku
Tokyo 106(JP)

(74) Representative: Burnside, Michael et al,
c/o Michael Burnside & Partners 2 Serjeants' Inn Fleet Street
London EC4Y 1HL(GB)

## (54) Polycarbonate-modified urethane acrylate adhesive.

(57) There is disclosed a polycarbonate-modified urethane acrylate adhesive comprising:

[A] a polycarbonate-modified urethane acrylate oligomer which is a reaction product of:

(1) 100 parts by weight of a hydroxyl group-containing (meth)acrylate represented by the formula [I]:

$$(CH_2=CR^1COO)_aR^2 \qquad [I]$$

wherein $R^1$ represents a hydrogen atom or a methyl group; $R^2$ represents a substituted or unsubstituted hydrocarbon group or a group with a valence of *a* having the hydrocarbon groups, which may be the same or different, bonded to each other with an ether bond or an ester bond and also having at least one hydroxyl group; and *a* is an integer of 1 to 3,

(2) 10 to 4,500 parts by weight of a bifunctional organic component comprising:

(a) a polycarbonate diol represented by the formula [II]:

$$HO\!\left(R^3O\text{-}\underset{\underset{O}{\|}}{C}\text{-}O\right)_n R^3OH \qquad [II]$$

wherein $R^3$, which may be the same or different, represents divalent hydrocarbon groups having 2 to 15 carbon atoms or divalent groups comprising the hydrocarbon groups, which may be the same or different, bonded to each other with an ether bond or an ester bond, which hydrocarbon groups may be substituted with a halogen atom; and *n* is a number of 1 to 60 on the average, and

(b) a bifunctional compound containing active hydrogen atom selected from the group consisting of alkylene glycol, its oxyacid ester, polyether diol, heterocyclic diol containing ether bond, polyester diol, thioether glycol and dithiol, containing 1 to 100 % by weight of (a) based on the total amount of the component (2); and

(3) 0.005 to 50 parts by weight of an alkoxy silane containing amino group or its partial hydrolyzed condensate, and

(4) a polyisocyanate containing 70 to 100 % of isocyanato groups of the theoretical amount reactive with the total active hydrogen atoms contained in the above components (1) to (3), and

[B] a reactive diluent in an amount of 5 to 1,000 % by weight of the [A].

EP 0 142 228 A1

# Polycarbonate-modified urethane acrylate adhesive

## BACKGROUND OF THE INVENTION

This invention relates to a polycarbonate-modified urethane acrylate adhesive, more specifically to a polycarbonate-modified urethane acrylate adhesive which is excellent in heat resistance, hydrolysis resistance as well as adhesion to a polycarbonate plate and a glass plate, being transparent and suitable as the intermediate film of glass-glass and glass-polycarbonate laminate.

Adhesives which have been employed for production of glass-glass or glass-polycarbonate laminates to be used as the so called safety glass are not completely satisfactory in performance. Such adhesives are required indispensably to have transparency, weathering resistance, water resistance and light resistance in addition to adhesion properties to glass and polycarbonate. Additionally, heat resistance and hot water resistance are required to be possessed. Moreover, when manufacturing a laminate of plates with large areas having different coefficients of thermal expansion such as a glass plate and a polycarbonate plate, in order to absorb the strain due to thermal expansion or shrinkage, it is necessary to obtain an adhesive layer which is soft after curing and

has great mechanical properties, particularly elongation.

Such an adhesive known in the art to be used as the adhesive for the safety glass is, for example, a composition containing an acrylic polymer as the main component as disclosed in Japanese Provisional Patent Publications No. 100515/1977 and No. 73881/1979. However, the above adhesive is inferior in hydrolysis resistance and interfacial peel-off occurs by boiling. Also, the cured product has no sufficient elasticity, thus involving the problem that the strain due to thermal expansion or shrinkage of the glass-polycarbonate plate can difficultly be absorbed.

On the other hand, Japanese Provisional Patent Publilcations No. 52527/1978 and No. 37253/1981 disclose a polyurethane to be used for the adhesive of a safety glass. However, such an adhesive has a serious problem that the adhesive layer will give rise to whitening phenomenon by boiling.

Further, Japanese Provisional Patent Publication No. 84855/1973 discloses a composition comprising an unsaturated polyurethane, an acrylate and a polymerization initiator to be used for adhesion of a safety glass. However, even such an adhesive is poor in adhesion to a glass, particularly having the problem of occurrence of peel-off at the glass-adhesive interface by boiling.

Still further, Japanese Provisional Patent Publication No. 132096/1977 discloses a polycarbonate diol-modified polyurethane which is formed into a film and used as the plastic layer of a glass laminate. However, it has not yet been known to use such a resin as the adhesive between a glass plate and a polycarbonate plate. Moreover, when used as the adhesive, it is required to effect curing and adhesion by heating at a high temperature or a

long time. When adhesion is effected by high temperature heating, water in the polycarbonate plate may be penetrated into the adhesive layer, whereby some troubles unsuitable for use as the safety glass may be caused such as loss of transparency of the adhesive layer due to absence of compatibility with the adhesive or occurrence of foaming. Also, such entrainment of water may be a cause for lowering adhesion. In order to avoid such problems, it is necessary to remove beforehand water in the polycarbonate plate by means of a high vacuum heating device, etc. Further, treatment under a high temperature atmosphere must be avoided, since it will result in deterioration of the polycarbonate plate. For this reason, use of the above resin for adhesion between a glass plate and a polycarbonate plate is necessarily required to take a long time at a relatively low temperature for its curing, whereby there is involved the problem that working efficiency is very poor.

Japanese Provisional Patent Publication No. 28213/1981 discloses an acrylated urethane polycarbonate which is cured by UV-ray irradiation and used as a non-solvent type paint. However, use of such a copolymer as the adhesive for glass plates has the problem that no sufficient adhesiveness can be obtained.

Japanese Provisional Patent Publication No. 69182/1975 discloses use of a block copolymer of polysiloxane and polycarbonate as the adhesive for the laminate of glass-polycarbonate. However, the layer comprising the above adhesive, although it is very excellent in impact resistance, is low in adhesion to a glass. Therefore, as disclosed in Japanese Provisional Patent Publication No. 117655/1980, it is necessary to form an adhesive layer comprising the block copolymer on two primer layers formed on the glass surface, thus involving the problem that the steps are very complicated.

On the other hand, it is well known in the art to employ a silane coupling agent as the adhesive or surface treating agent for a glass. However, such a silane coupling agent also differs in adhesiveness relative to plastic materials depending on the individual plastic to be adhered, and no silane coupling agent having sufficient adhesion to a polycarbonate has yet been known. No example has been also known in the art in which a silane coupling agent is allowed to react with a polyisocyanate to use as an adhesive as practiced in this invention.

## SUMMARY OF THE INVENTION

An object of this invention is to overcome the problems as described above and to provide an adhesive, having excellent adhesiveness as the adhesive to be employed in production of a glass-glass or glass-polycarbonate laminate, being curable at a relatively low temperature and capable of giving a cured product having performances such as excellent heat resistance, hydrolysis resistance, etc.

More specifically, the polycarbonate-modified urethane acrylate adhesive of this invention comprises:

[A] a polycarbonate-modified urethane acrylate oligomer which is a reaction product of:

(1) 100 parts by weight of a hydroxyl group-containing (meth)acrylate represented by the formula [I]:

$$(CH_2=CR^1COO)_aR^2 \qquad [I]$$

wherein $R^1$ represents a hydrogen atom or a methyl group; $R^2$ represents a substituted or unsubstituted hydrocarbon group or a group with a valence of *a* having said hydrocarbon groups, which may be the same or different, bonded to each other with an ether bond or an ester bond and also having at

least one hydroxyl group; and a is an integer of 1 to 3,

(2) 10 to 4,500 parts by weight of a bifunctional organic component comprising:

(a) a polycarbonate diol represented by the formula [II]:

$$HO{-}\!\!\left[R^3O{-}\underset{\underset{O}{\|}}{C}{-}O\right]_n\!R^3OH \qquad [II]$$

wherein $R^3$, which may be the same or different, represents divalent hydrocarbon groups having 2 to 15 carbon atoms or divalent groups comprising said hydrocarbon groups, which may be the same or different, bonded to each other with an ether bond or an ester bond, which hydrocarbon groups may be substituted with a halogen atom; and n is a number of 1 to 60 on the average, and

(b) a bifunctional compound containing active hydrogen atom selected from the group consisting of alkylene glycol, its oxyacid ester, polyether diol, heterocyclic diol containing ether bond, polyester diol, thioether glycol and dithiol, containing 1 to 100 % by weight of (a) based on the total amount of the component (2); and

(3) 0.005 to 50 parts by weight of an alkoxy silane containing amino group or its partial hydrolyzed condensate, and

(4) a polyisocyanate containing 70 to 100 % of isocyanato groups of the theoretical amount reactive with the total active hydrogen atoms contained in the above components (1) to (3),

and

[B] a reactive diluent in an amount of 5 to 1,000 % by weight of said [A].

DESCRIPTION OF THE PREFERRED EMBODIMENTS

In this invention, the hydroxyl group-containing (meth)-acrylate (1) is a component for imparting the curing property through the reaction with the polyisocyanate (4) by heating at a relatively low temperature or by irradiation of light. $R^2$ in the formula [I] represents a group with valence of a having at least one hydroxyl group. Such a group with valence of a is a substituted or unsubstituted hydrocarbon group having at least one hydroxyl group or a group having the same or different hydrocarbon groups, at least one of which have at least one hydroxyl group, bonded to each other with an ether bond or an ester bond. Examples of the above $R^2$ may include hydroxyl group-containing hydrocarbon groups such as a hydroxyethyl group, a hydroxypropyl group, a glycerol group, a tetramethylolmethyne group, etc.; hydroxyl group-containing hydrocarbon groups containing ether bond such as a hydroxy butoxy propoxy group, a hydroxy phenyloxy propoxy group, etc.; and hydroxyl group-containing hydrocarbon groups containing ester bond such as a hydroxy-(meth)acryloyloxy group, etc. These hydrocarbon groups may be substituted with halogen atoms, and others. In order to impart physical properties, particularly elasticity, to the adhesive after curing, a is required to be within the range of 1 to 3. Such hydroxyl group-containing (meth)acrlates may include, for example, 2-hydroxyethyl acrylate, 2-hydroxypropyl acrylate, 3-hydroxypropyl acrylate, 2-hydroxy-3-chloropropyl acrylate, 2-hydroxy-3-butoxypropyl acrylate, 2-hydroxy-3-(meth)acryloyloxypropyl acrylate, 2-hydroxy-3-phenyloxy acrylate, 1,4-butyleneglycol monoacrylate, glycerine monoacrylate, glycerine diacrylate, trimethylolpropane diacrylate, tetramethylolmethane triacrylate, triethyleneglycol monoacrylate, polypropyleneglycol monoacrylate, poly-caprolactoneglycol monoacrylate, and methacrylates corresponding to these acrylates.

In this invention, (2) comprises (a) a polycrbonate diol and (b) a bifunctional organic compound containing active hydrogen atom which is added for prevention of the adhesive from impairment of transparency through crystallization of the urethane acrylate oligomer. In the case when (a) does not bring about crystallization of said oligomer, it is not necessarily required to add the component (b). Each of the components (a) and (b) may be used either singly or in combination of two or more compounds.

The polycarbonate diol (2)(a) is the component which reacts with the isocyanate (4) to constitute a part of the component [A] and imparts hydrolysis resistance, heat resistance and adhesiveness to a polycarbonate plate to the adhesive. In the formula [II], the hydrocarbon group $R^3$ may be either aromatic or aliphatic, being a divalent group having 2 to 15 atoms or a divalent group having at least one group containing said hydrocarbon groups bonded to each other with an ether bond or an ester bond, and the hydrogen atoms of said hydrocarbon group may be substituted with halogen atoms. Further, the hydrocarbon group bonded with an ether bond or an ester bond may form a heterocyclic ring. As the number of carbon atoms of this hydrocarbon group is increased, the oligomer becomes more liable to form crystallinity. In order to avoid this phenomenon, it is required to add a bifunctional compound containing active hydrogen atom (b).

Such a $R^3$ group may be exemplified by an ethylene group, a propylene group, a tetramethylene group, a neopentylene group, a hexamethylene group, an octamethylene group, a decamethylene group, and the groups represented by the following formulae:

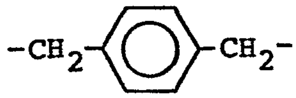 , 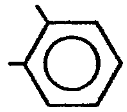 , 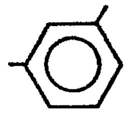 , 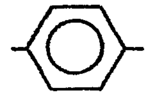 ,

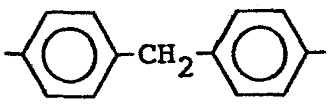 , 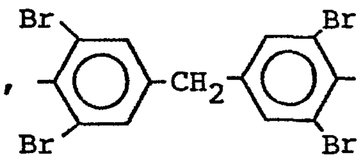 , 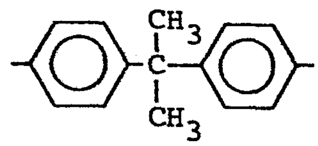 ,

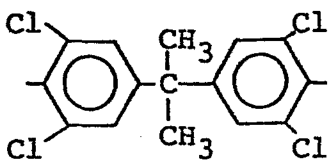 , 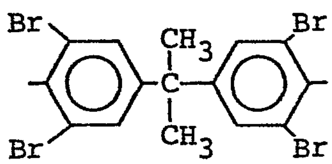 , $-CH_2CH_2OCH_2CH_2-$ ,

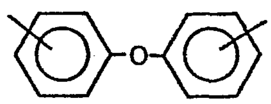 , 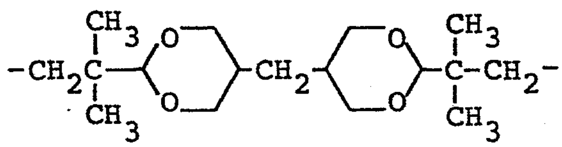 and

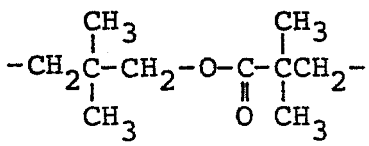 .

Among them, because of no crystallinity exhibited by the resultant oligomer, it is preferred to use an alkylene group having 2 to 10 carbon atoms such as an ethylene group, a propylene group, a tetramethylene group, a neopentylene group, a hexamethylene group, an octamethylene group, a decamethylene group, etc. or a group containing such a group.

The notation n is a value indicating the degree of polymerization of the polycarbonate compound, its average value being within the range of 1 to 60, preferably 1 to 25. Accordingly, the average molecular weight of such a polycarbonate compound should preferably be within the range of 250 to 5,000, more preferably 500 to 2,000. If n exceeds 60, the polycarbonate-modified urethane acrylate oligomer has too great a molecular weight, so

that its crystallinity becomes too strong to maintain liquid state at room temperature, whereby the adhesive can difficultly maintain transparency. On the other hand, if the average molecular weight is too small, the adhesive strength will undesirably be lowered.

The bifunctional compound containing active hydrogen group (2)(b) is a component for maintaining transparency of the adhesive. Such bifunctional compounds containing active hydrogen atom may include, for example, alkylene diols such as ethylene glycol, propylene glycol, 1,3-propane diol, 1,4-butane diol, neopentyl glycol and 1,6-hexane diol; oxyacid esters of alkylene diols such as lactic acid propylene glycol ester and hydroxypivalic acid neopentyl glycol ester; polyether diols such as diethylene glycol, triethylene glycol, 2,2-bis-[4-(2-hydroxypropoxy)phenyl]propane, polypropylene glycol, polytetramethylene glycol, etc.; heterocyclic diols containing ether bond such as 3,9-bis-(1,1-dimethyl-2-hydroxyethyl)-2,4,8,10-tetraoxaspiro[5,5]-undecane, etc.; polycaprolactone diol obtained by ring opening polymerization; polyester diols obtained by polycondensation between divalent alcohols such as ethylene glycol, propylene glycol and tetramethylene glycol and dibasic acids such as maleic acid, fumaric acid, adipic acid, sebacic acid, azelaic acid and phthalic acid; thioether glycols such as diethylene thioether glycol; dithiols such as ethylene dithiol, trimethylene dithiol and tetramethylene dithiol; and so on. Among them, those having relatively smaller molecular weight are preferred.

The amount of (a) formulated based on the total quantity of (2) is 1 to 100 % by weight, preferably 50 to 98 % by weight. If the amount of (a) is less than 1 % by weight, the adhesive may be lowered in hydrolysis resistance, heat resistance and adhesiveness to a polycarbonate plate.

The amount of component (2) formulated is 10 to 4,500 parts by weight per 100 parts by weight of component (1), preferably 100 to 1,100 parts by weight. At a level less than 10 parts by weight, the adhesive may be lowered in hydrolysis resistance, heat resistance and adhesiveness to a polycarbonate plate. On the contrary, an amount in excess of 4,500 parts by weight will make the oligomer more crystalline to impair transparency of the adhesive.

The alkoxysilane containing amino group or its partially hydrolyzed condensate (3) is added for incorporation of a silicon functionality to the main component [A] of the adhesive through the reaction with the isocyanato group of (4) thereby to improve adhesiveness with a glass. Such an alkoxysilane or its partially hydrolyzed condensate may be exemplified by γ-aminopropyl trimethoxysilane, γ-aminopropyl triethoxysilane, N-(β-aminoethyl)-γ-aminopropyl trimethoxysilane, N-(β-aminoethyl)-γ-aminopropylmethyl dimethoxysilane, γ-anilinopropyl trimethoxysilane, etc. and partially hydrolyzed condensates of the above mentioned alkoxysilanes. These examples are not limitative of the present invention. Among them, for good adhesion to a glass, an alkoxysilane containing amino group is particularly preferred. Above all, N-(β-aminoethyl)-γ-aminopropyl trimethoxysilane is particularly preferred.

The amount of component (3) formulated is 0.005 to 50 parts by weight per 100 parts by weight of component (1), preferably 0.1 to 20 parts by weight. At a level less than 0.005 part by weight, no good adhesion to a glass can be obtained, while no further improvement can be obtained in proportion to the amount even when added in excess of 50 parts by weight, but adhesion to a polycarbonate will be contrariwise lowered.

The polyisocyanate (4) reacts with the hydroxyl group

of (1), the hydroxyl group and/or the thiol group of (2) and the amino group containing active hydrogen atom of (3) to form the urethane acrylate oligomer [A] which is the main component of the adhesive. As such a polyisocyante, polyisocyanates to be used in urethanization reactions in general may be available. Particularly, when excellent photostability is demanded, it is preferred to use the so-called non-yellowing type polyisocyanate. Such polyisocyanates may include, for example, tolylene diisocyanate, diphenylmethane diisocyanate, naphthalene diisocyanate, xylylene diisocyanate, hydrogenated xylylene diisocyanate, hexamethylene diisocyanate, trimethylhexamethylene diisocyanate, isophorone diisocyanate, methylene-bis(4-cyclohexyl isocyanate), and those represented by the following formulae:

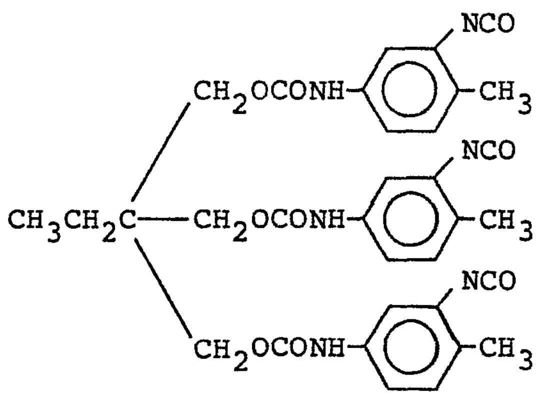

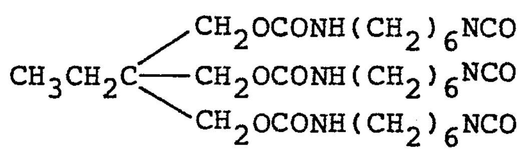

and

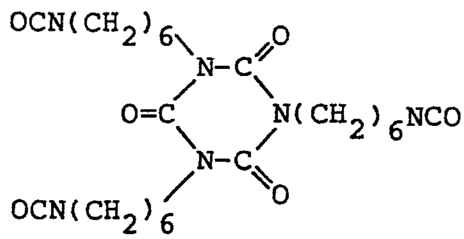

These compounds may be used either singly or in combination of two or more compounds. Among them, because of formation of no crystallinity of the resultant urethane acrylate oligomer, it is particularly preferred to use tolylene diisocyanate, xylylene diisocyanate, trimethylhexamethylene diisocyanate and isophorone diisocyanate. Also, for imparting sufficient flexibility and elongation to the adhesive, it is preferred that 80 % or more, more preferably the total amount, should be the diisocyanate.

The amount of component (4) formulated may be such that the amount of the isocyanato groups contained in the polyisocyanate should be 70 to 100 % of the theoretical amount reactive with the total amount of the active hydrogen atoms contained in components (1), (2) and (3), preferably within the range of 80 to 98 %. If the amount of the isocynate groups is less than 70 %, the molecular weight of the urethane acrylate oligomer becomes smaller, whereby the mechanical strength of the adhesive after curing becomes lower. On the other hand, in excess of 100 %, due to the presence of the excessive isocynate groups remaining in the oligomer, stability during storage of the adhesive will be lowered.

The above component [A] should preferably be prepared by, for example, adding dropwise (4) into a mixed solution prepared from (1), (2) and (3). Although the reaction can proceed at room temepratture, it is preferred to carry out the reaction by heating to 40 to 80 $^{o}$C. In this case, if desired, it is also possible to add a reaction catalyst such as dibutyltin difatty acid salt, etc. or a polymerization inhibitor such as 2,4-di-tert-butyl-4-hydroxytoluene, etc. Also, the above reaction may be carried out with addition of [B] having no active hydrogen atom. After completion of the dropwise addition, stirring is further continued to complete the reaction. The reaction time, which may differ depending

on the polyisocyanate employed, should preferably be 1 to 10 hours. When a reaction catalyst is added, its amount may differ depending on the polyisocyanate employed, but preferably be 0 to 5 % by weight, more preferably 0.001 to 1 % by weight, based on the total amount of [A].

The component [A] thus obtained is a mixture of various oligomers in which double bonds of (meth)acrylate, alkoxysilyl groups, and hydroxyl groups or thiol groups are present at the terminal ends of polyurethane chains elongated in chain length through urethane bonds.

The reactive diluent [B] to be used in the present invention is formulated for the purpose of improving workability of the adhesive during filling or coating step by lowering the viscosity of the adhesive and also preventing crystallization of the adhesive. For such a reactive diluent, any material may be available, provided that it will difficultly corrode a polycarbonate plate. Such reactive diluents may be inclusive of, for example, hydroxyl group-containing (meth)acrylates to be used as the (1); acrylates such as 2-ethylhexyl acrylate, propyleneglycol diacrylate, butyleneglycol diacrylate, 1,4-butanediol diacrylate, neopentylglycol diacrylate, 1,6-hexanediol diacrylate, butoxyethylene glycol acrylate, tetrahydrofurfuryl acrylate, cyclohexyl acrylate, benzyl acrylate, ethylcarbitol acrylate, butoxyethyl acrylate, butoxydiethyleneglycol monoacrylate or glycidyl acrylate; methacryaltes corresponding to the aforesaid acrylates; (meth)acrylic compounds having no hydroxyl group such as (meth)acrylate oligomers; and vinyl compounds such as N-vinyl-2-pyrrolidone; etc. These reactive diluents are added after synthesis of the component [A], when having a functional group reactive with isocyanato group. When having no group reactive with isocyanato group, it can be added either during or after synthesis of the component [A].

The amount of the component [B] formulated may be 5 to 1,000 % by weight, preferably 30 to 200 % by weight, based on [A]. If it is less than 5 % by weight, it is difficult to obtain good workability during filling or coating. On the other hand, in excess of 1,000 % by weight, mechanical strength of the cured product or adhesion to a polycarbonate plate may sometimes markedly be lowered.

The adhesive of the present invention should have a viscosity at room temperature preferably of 1,000,000 cP or lower, more preferably 100,000 cP or lower, most preferably 10,000 cP or lower.

The adhesive of the present invention may further contain known UV-absorbers, antioxidants, age registers, etc. for improvement of weathering resistance.

The adhesive of the present invention, due to the presence of (meth)acrylate groups having double bonds at the terminal ends of the oligomer of the component [A], is readily curable within a short period of time by heating if a thermal polymerization initiator is added or by irradiation of UV-ray, if a photo-polymerization initiator is added, or electron beam. When the adhesive of the present invention is cured by heating, it can be cured by heating at room temperature to about 90 °C after filling or coating between substrates. In the case of a substrate which is a laminate of glass-polycarbonate, it is preferred to cure at about room temperature to 70 °C. As the thermal polymerization initiator, there may be employed, for example, benzoyl peroxide, lauroyl peroxide, succinic acid peroxide, methyl ethyl ketone peroxide and cyclohexanone peroxide. On the other hand, when curing with addition of a photo-polymerization initiator, it can be cured by irradiation of UV-ray or electron beam by use of a UV-fluorescent lamp or a high

pressure mercury lamp. When it is desired to avoid heating of the material to be coated or the adhesive, it is preferable to employ irradiation of UV-ray. As the photopolymerization initiator, there may be included, for example, benzophenone, 2,4-dihydroxybenzophenone, 2-hydroxy-4-methoxybenzophenone, acetophenone, benzoin, benzoin ethyl ether, benzoin n-propyl ether, benzoin isopropyl ether, benzoin n-butyl ether, benzoin isobutyl ether, benzyl, 1-(4-isopropylphenyl)-2-hydroxy-2-methyl-propane-1-one, 2-hydroxy-2-methyl-1-phenylpropane-1-one, benzyl sulfide, thioxanthone, 2-chlorothioxanthone and the like.

As a mode of use of the adhesive of the present invention, for example, a composition formulated with a photopolymerization initiator may be poured into the gap of a pair of glass plates sealed at the side portions and the bottom portion with spacers so that no air bubble may be entrained, followed by curing by irradiation of UV-ray. Similarly, a polycarbonate plate can be adhered to a glass plate. In this case, no primer is particularly required, but a primer treatment may also be applied on a glass plate or a polycarbonate plate, when a permanent adhesion is desired to be effected.

The polycarbonate-modified urethane acrylate adhesive of the present invention as constituted above may be employed for production of a multi-layer laminate of two or more layers of transparent substrates such as glass-glass, glass-polycarbonate, etc., and it can exhibit excellent heat resistance, hydrolysis resistance and adhesion, without corrosion of substates. Also, the adhesive of the present invention is very pliable after curing and excellent in mechanical properties, particularly elongation, thus exhibiting excellent properties as the intermediate layer for glass-glass and glass-polycarbonate laminated plates. Further, during filling or

coating of the adhesive, the adhesive requires no expensive device for adhesion as required in the prior art, but enables curing within a short period of time by use of a fluorescent lamp, etc. at room temperature or by a relatively low temperature elevation without essential requirement of a treatment such as primer coating, thus having excellent workability.

The present invention is illustrated by referring to the following Examples, in which parts represent all parts by weight.

Synthesis example 1

In a stainless steel reactor equipped with a thermometer, a column equipped with a distillation head, a heater, an air condenser, a reservoir and a vacuum pump, 1,750 parts of 1,6-hexanediol, 2,325 parts of diphenyl carbonate and 18.5 parts of a catalyst solution prepared by dissolving 10 wt.% of tetrabutyl titanate in 1,4-butanediol were charged, and the reaction was carried out by mixing with stirring under heating at 100 $^{o}C$ under a reduced pressure of 10 Torr for 5 hours. Further, the pressure was reduced to 1 Torr, and the temperature was elevated to 130 $^{o}C$ to remove completely phenol to obtain 1,991 parts of a transparent pale yellow liquid reaction product at 100 $^{o}C$. When the reaction product was cooled to room temperature, it exhibited a state of white wax. The polycarbonate diol thus prepared had a hydroxyl value of 219.1 and an average molecular weight of 512. This is hereinafter called as the polycarbonate diol I.

Synthesis example 2

By use of the same reactor as in Synthesis example 1, 1,6-hexanediol and diphenyl carbonate in amounts as indicated in Table 1 and the same catalyst as in

Synthesis example 1, the reactions were conducted under the same conditions as in Synthesis example 1 to obtaine polycarbonate diols II and III, respectively, as shown in Table 1.

Table 1

| Polycarbonate diol | II | III |
|---|---|---|
| Starting materials: (parts) | | |
| 1,6-Hexanediol | 1,530 | 1,460 |
| Diphenyl carbonate | 2,380 | 2,456 |
| Catalyst solution | 20.5 | 20.0 |
| Yield (parts) | 1,782 | 1,723 |
| Hydroxyl value | 113.9 | 57.2 |
| Average molecular weight | 985 | 1,960 |

Synthesis example 3

By use of the same reactor as in Synthesis example 1, 900 parts of 1,4-butanediol in place of 1,6-hexanediol and 897.5 parts of bisphenol A-propylene oxide 2-mole adduct (average molecular weight 359) and the amount of diphenyl carbonate is 2,140 parts, under the same conditions as in Synthesis example 1 except for the reaction temperature is 120 $^{o}C$, the reaction was conducted under the same conditions as Synthesis example 1, to obtain 2,016 parts of a polycarbonate diol IV having a hydroxyl value of 136.3 and an average molecular weight of 823.

Example 1

A batch of 410 parts of the polycarbonate diol I obtained in Synthesis example 1, 41.6 parts of hydroxypivalic neopentyl glycol ester, 20.3 parts of 3,9-bis-(1,1-dimethyl-2-hydroxyethyl)-2,4,8,10-tetraoxaspiro[5,5]-undecane, 260 parts of 2-hydroxypropylacrylate, 0.52 part

of dibutyltin dilaurate as the catalyst and 1.04 part of hydroquinone monomethyl ether as the polymerization inhibitor were charged into a four-necked flask and mixed thoroughly while stirring under heating at 70 °C. Then, 5 parts of N-(β-aminoethyl)-γ-aminopropyl trimethoxysilane were added and 316 parts of xylylene diisocyanate were added dropwise into the mixture at an equal rate over 2 hours. Further, stirring of the mixture was continued and the temperature was elevated to 75 °C, whereat urethanization reaction was continued for 9 hours. After confirming by chemical analytis that the conversion of isocyanato groups became 99 %, the mixture was cooled to obtain 1,033 parts of a polycarbonate-modified urethane acrylate oligomer.

With 450 parts of the thus obtained polycarbonate-modified urethane acrylate oligomer were homogeneously mixed with stirring 50 parts of neopentylglycol diacrylate, 150 parts of 2-ethylhexyl acrylate and 350 parts of 2-hydroxy-3-butoxypropyl methacrylate as the reactive diluents, and 20 parts of 1-(4-isopropylphenyl)-2-hydroxy-2-methylpropane-1-one as the photopolymerization initiator to obtain a polycarbonate-modified urethane acrylate adhesive A according to the present invention.

Example 2

The polycarbonate diol II and III obtained in Synthesis example 2 and bifunctional compounds containing active hydrogen atom as indicated in Table 2, hydroxyl group-containing (meth)acrylate, reactive diluents, catalysts and polymerization inhibitors were charged in the same reactor as in Example 1 and mixed thoroughly with stirring under the conditions shown in Table 2. Then, after addition of the amino group-containing alkoxy silane indicated in Table 2, a polyisocyanate was added dropwise to obtain the polycarbonate-modified oligomer or

a mixture containing said oligomer as the main component together with a reactive diluent under the conditions shown in Table 2. To the oligomers or the mixtures were added the reactive diluents and polymerization initiators shown in Table 3 to prepare the polycarbonate-modified urethane acrylate adhesives B - G, respectively.

Table 2

| Polycarbonate-modified urethane acrylate adhesive: | B | C | D | E | F | G |
|---|---|---|---|---|---|---|
| Polycarbonate diol (parts) | | | | | | |
| Polycarbonate diol II | 178 | 333 | 546 | | | 178 |
| Polycarbonate diol III | | | | 525 | 525 | |
| Bifunctional compound containing active hydrogen atom (parts) | | | | | | |
| Product of 2-mole propylene oxide added to bisphenol A(*1) | 140 | 55 | | | | 140 |
| 1,4-Butanediol | | | | 8.1 | 8.1 | |
| Neopentyl glycol | 14.8 | | | | | |
| Hydroxypivalic neopentyl glycol ester | | 25.6 | 28.8 | | | |
| Diethylenethioether glycol | | | | | | 20.4 |
| Hydroxyl containing (meth)acrylate (parts) | | | | | | |
| 2-Hydroxypropyl acrylate | | 160 | 180 | | | |
| 2-Hydroxy-3-butoxypropyl acrylate | 184 | | | | | 156 |
| 2-Hydroxy-3-methacryloyloxypropyl methacrylate | | | | 101 | 101 | |
| Glycerine diacrylate | | | | | | 28 |
| Reactive diluent (parts) | | | | | | |
| 2-Ethylhexyl acrylate | 200 | 200 | | | | 200 |
| Tetrahydrofurfuryl acrylate | | | | 200 | 200 | |
| Dibutyltin dilaurate (parts) | 0.25 | 0.25 | 0.95 | 0.47 | 0.47 | 0.25 |
| 2,6-Di-tert-butyl-4-hydroxytoluene (parts) | 0.5 | 0.5 | 0.95 | 0.94 | 0.94 | 0.5 |
| Mixing temperature (°C) | 50 | 50 | 50 | 70 | 70 | 50 |

Table 2 (contd.)

| Polycarbonate-modified urethane acrylate adhesive: | B | C | D | E | F | G |
|---|---|---|---|---|---|---|
| Amino-containing alkoxy-silane (parts) | | | | | | |
| γ-Aminopropyl triethoxysilane | | | | | | 18 |
| N-(β-aminoethyl)-γ-aminopropyl trimethoxysilane | 10 | 5 | 4.8 | 0.3 | 3 | |
| Polyisocyante (parts) | | | | | | |
| Isophorone diisocyante | 258 | 246 | 277 | | | |
| Trimethylhexamethylene diisocyanate | | | | 92 | 92 | |
| Tolylene diisocyante (*2) | | | | | | 201 |
| Polyisocyante dropping temperature (°C) | 70 | 60 | 60 | 70 | 70 | 70 |
| Polyisocyanate dropping time (Hr) | 1 | 2 | 2 | 1 | 1 | 1 |
| Reaction temperature (°C) | 70 | 70 | 70 | 70 | 70 | 70 |
| Reaction time (Hr) | 10 | 7 | 7 | 7 | 7 | 8 |
| Isocyanato group conversion (%) | >99 | >99 | >99 | >99 | >99 | >99 |
| Yield (parts) | 956 | 999 | 997 | 919 | 921 | 914 |

Note: *1; average molecular weight 359.

*2; mixture of 2,4-tolylene diisocyanate and 2,6-tolylene diisocyanate at a weight ratio of 80:20.

Table 3

| Polycarbonate-modified urethane acrylate adhesive: | B | C | D | E | F | G |
|---|---|---|---|---|---|---|
| Oligomer mixture obtained in Table 2 (parts) | 625 | 613 | 538 | 500 | 500 | 575 |
| Reactive diluent (parts) | | | | | | |
| 2-Hydroxyethyl methacrylate | | | 108 | 100 | 100 | |
| 2-Hydroxypropyl acrylate | | 245 | 225 | 250 | 250 | |
| 2-Hydroxypropyl methacrylate | 230 | | | | | 300 |
| 2-Hydroxy-3-phenyl-oxypropyl acrylate | | 123 | 206 | 150 | 150 | |
| Tetrahydrofurfuryl acrylate | 125 | | | | | |
| Butoxydiethylene glycol monomethacrylate | | | | | | 125 |
| N-vinyl-2-pyrrolidone | 20 | | | | | |
| Polymerization initiator (parts) | | | | | | |
| 2-Hydroxy-2-methyl-1-phenylpropane-1-one | 20 | 20 | 22 | | | 20 |
| Benzoin ethyl ether | | | | 30 | 30 | |

Example 3

A batch of 312 parts of the polycarbonate diol IV obtained in Synthesis example 3, 86 parts of a polypropylene glycol having an average molecular weight of 340, 280 parts of 2-hydroxy-3-phenyloxypropyl acrylate, 0.5 part of dibutyltin dilaurate and 1 part of 2,6-di-tert-butyl-4-hydroxytoluene were charged into a four-necked flask and thoroughly mixed with stirring under heating at 70 °C. Then, after addition of 2.5 parts of γ-aminopropyl triethoxysilane, 322 parts of methylene-bis(4-cyclohexylisocyanate) were added dropwise into the mixture at an equal rate over 2 hours. Further, stirring of the reaction system was continued, and the temperature was elevated to 75 °C, whereat urethanization reaction was continued for 9.5 hours. After confirming by chemical analysis that the conversion of the isocyanato groups became 99 %, the mixture was cooled to obtain 959 parts of a polycarbonate-modified urethane acrylate oligomer.

With 400 parts of the thus obtained polycarbonate-modified urethane acrylate oligomer were homogeneously stirred and mixed 100 parts of neopentylglycol diacrylate, 150 parts of ethylcarbitol acrylate and 350 parts of 2-hydroxy-3-butoxypropyl methacrylate as reactive diluents, and 30 parts of benzoin ethyl ether as the photopolymerization initiator, to obtain a photopolymerizable polycarbonate-modified urethane acrylate adhesive H according to this invention.

Comparative example 1

Example 1 was repeated except that a polycaprolactone diol having an average molecular weight of 514 was used in place of the polycarbonate to obtain 995 parts of an oligomer with a conversion of isocyanato groups of 99 % or higher. Other components were formulated with 400

parts of this oligomer similarly as in Example 1 to obtain a polycaprolactone-modified urethane acrylate adhesive J as Control sample.

Comparative example 2

In synthesis of the polycarbonate-modified urethane acrylate adhesive B of Example 2, employing the same composition and the synthetic procedure except for not using N-(β-aminoethyl)-γ-aminopropyl trimethoxysilane, 953 parts of an oligomer with a conversion of isocyanato groups of 99 % or higher were obtained. Using 625 parts of this oligomer and formulating other components similarly as in the adhesive B obtained in Example 2, a polycarbonate-modified urethane acrylate adhesive K was obtained as Control sample.

Example 4

A square polycarbonate plate with a side length of 30 cm and a thickness of 0.5 mm and a glass plate having the same planar shape and a thickness of 3 mm were fixed in parallel with a spacer so as to maintain a distance of 0.5 mm therebetween, with the three sides being sealed with tapes so that the adhesive may not be flown out. With this opened side upward, the polycarbonate-modified urethane acrylate adhesives A - H prepared in Examples 1 - 3 and the adhesives J and K prepared in Comparative examples 1 and 2 were each filled into the whole gap so that no air bubble may be entrained therein. After completion of filling, the opening at the upper end was sealed with a tape. The laminate was irradiated by UV-ray by means of a UV-ray irradiating device equipped with a high pressure mercury lamp of an output of 30 W/cm at a distance of 15 cm from the side of the glass plate for 5 seconds to cure the adhesive to obtain a glass-adhesive-polycarbonate laminate.

For the thus prepared each laminate, its appearance and the adhered state were observed, and the shear adhesive strength and the peel-off adhesive strength were measured. Also, the following tests were performed for the laminate prepared according to the same method.

(1) Boiling test: After the laminate was dipped vertically in hot water at 65 °C for 3 minutes, it was immersed immediately in boiling water at 100 °C for 2 hours. Appearance and the adhered state of this laminate were compared with those at room temperature, and the shear adhesive strength and the peel-off adhesive strength were measured.

(2) Heat resistance test: After the laminate was left to stand in a thermostat at 100 °C for 2 hours, comparison and measurements were conducted similarly as in (1).

(3) Cold resistance test: After the laminate was left to stand in a thermostat at -20 °C and -40 °C for 48 hours, its appearance was compared with that under normal conditions.

These results are shown in Table 4.

Table 4

| Adhesive | A | B | C | D | E | F | G | H | J (Comparative) | K (Comparative) |
|---|---|---|---|---|---|---|---|---|---|---|
| Normal state: | | | | | | | | | | |
| Appearance | colorless transparent | colorless transparent | colorless transparent | colorless transparent | color less transparent | colorless transparent | colorless transparent | colorless transparent | colorless transparent | colorless transparent |
| Adhered state | Good | Good | Good | Good | Good | Good | Good | Good | Good | Good |
| Shear adhesive strength [$kg/cm^2$] | 66 | 56 | 79 | 80 | 52 | 54 | 54 | 68 | 23 | 26 |
| Peel-off adhesive strength [kg/cm] | 1.7 | 2.2 | 3.0 | 3.7 | 1.3 | 2.0 | 1.9 | 1.8 | 0.5 | 0.7 |
| Boiling test: | | | | | | | | | | |
| Appearance | no change | no change | no change | no change | no change | no change | no change | no change | *1 | - |
| Adhered state | " | " | " | " | " | " | " | " | *2 | *3 |
| Shear adhesive strength [$kg/cm^2$] | 31 | 27 | 35 | 40 | 20 | 24 | 25 | 28 | - | - |
| Peel-off adhesive strength [kg/cm] | 0.9 | 1.3 | 1.6 | 1.8 | 0.3 | 0.8 | 1.2 | 1.1 | - | - |

Table 4 (Contd.)

| Adhesive | A | B | C | D | E | F | G | H | J (Comparative) | K (Comparative) |
|---|---|---|---|---|---|---|---|---|---|---|
| **Heat resistance test:** | | | | | | | | | | |
| Appearance | no change | no change | no change | no change | no change | no change | no change | no change | - | - |
| Adhered state | " | " | " | " | *4 | " | " | " | *2 | *3 |
| Shear adhesive strength [$kg/cm^2$] | 69 | 63 | 81 | 82 | 52 | 58 | 59 | 64 | - | - |
| Peel-off adhesive strength [kg/cm] | 2.1 | 2.7 | 3.6 | 4.2 | 1.5 | 1.9 | 2.4 | 2.2 | - | - |
| **Cold resistance test:** | | | | | | | | | | |
| -20 °C, 48 Hr, Appearance | no change | no change | no change | no change | no change | no change | no change | no change | no change | no change |
| -40 °C, 48 Hr, Appearance | " | " | " | " | " | " | " | " | " | " |

Note: *1; adhesive layer became white turbid
*2; wholly peeled off between the adhesive and polycarbonate
*3; wholly peeled off between the adhesive and glass
*4; slightly peeled off between the adhesive and glass.

As apparently seen from the above results, the polyacrylate-modified urethane acrylate adhesive was confirmed to be excellent in adhesiveness with a glass plate and a polycarbonate plate and also excellent in heat resistance as well as hydrolysis resistance.

Claims:

1. A polycarbonate-modified urethane acrylate adhesive, which comprises:

[A] a polycarbonate-modified urethane acrylate oligomer which is a reaction product of:

(1) 100 parts by weight of a hydroxyl containing (meth)acrylate represented by the formula [I]:

$$(CH_2=CR^1COO)_aR^2 \qquad [I]$$

wherein $R^1$ represents a hydrogen atom or a methyl group; $R^2$ represents a substituted or unsubstituted hydrocarbon group or a group with a valence of a having said hydrocarbon groups, which may be the same or different, bonded to each other with an ether bond or an ester bond and also having at least one hydroxyl group; and a is an integer of 1 to 3,

(2) 10 to 4,500 parts by weight of a bifunctional organic component comprising:

(a) a polycarbonate diol represented by the formula [II]:

$$HO\left[R^3O-\underset{\underset{O}{\|}}{C}-O\right]_nR^3OH \qquad [II]$$

wherein $R^3$, which may be the same or different, represents divalent hydrocarbon groups having 2 to 15 carbon atoms or divalent groups comprising said hydrocarbon groups, which may be the same or different, bonded to each other with an ether bond or an ester bond, which hydrocarbon groups may be substituted with a halogen atom; and n is a number of 1 to 60 on the average, and

(b) a bifunctional compound containing active hydrogen atom selected from the group consisting

of alkylene glycol, its oxyacid ester, polyether diol, heterocyclic diol containing ether bond, polyester diol, thioether glycol and dithiol, containing 1 to 100 % by weight of (a) based on the total amount of the component (2); and

(3) 0.005 to 50 parts by weight of an alkoxy silane containing amino group or its partial hydrolyzed condensate, and

(4) a polyisocyanate containing 70 to 100 % of isocyanato groups of the theoretical amount reactive with the total active hydrogen atoms contained in the above components (1) to (3),

and

[B] a reactive diluent in an amount of 5 to 1,000 % by weight of said [A].

2. The polycarbonate-modified urethane acrylate adhesive according to Claim 1, wherein $R^3$ is an alkylene group having 2 to 10 carbon atoms.

3. The polycarbonate-modified urethane acrylate adhesive according to Claim 1, wherein (2)(a) has an average molecular weight of 500 to 2,000.

4. The polycarbonate-modified urethane acrylate adhesive according to Claim 1, wherein the amount of (2)(a) is 50 to 98 % by weight based on the total amount of (2).

5. The polycarbonate-modified urethane acrylate adhesive according to Claim 1, wherein (3) is an amino group-containing alkoxysilane.

6. The polycarbonate-modified urethane acrylate adhesive according to Claim 5, wherein (3) is N-(β-aminoethyl)-γ-aminopropyl trimethoxysilane.

7. The polycarbonate-modified urethane acrylate adhesive according to Claim 1, wherein (4) is a diisocyanate.

8. The polycarbonate-modified urethane acrylate adhesive according to Claim 7, wherein (4) is selected from the group consisting of tolylene diisocyanate, xylylene diisocyasnate, trimethylhexamethylene diisocyanate and isophorone diisocyanate.

9. The polycarbonate-modified urethane acrylate adhesive according to Claim 1, wherein the reactive diluent is a (meth)acrylate.

10. The polycarbonate-modified urethane acrylate adhesive according to Claim 1, wherein [B] is formulated in an amount of 30 to 200 % by weight based on [A].

European Patent Office

# EUROPEAN SEARCH REPORT

0142228

Application number

EP 84 30 5770

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | EP-A-0 007 265 (SOC. NAT. DES POUDRES)<br>--- | | C 08 G 18/67<br>C 08 G 18/44<br>C 08 G 18/66<br>C 09 J 3/16<br>B 32 B 17/10 |
| A | EP-A-0 025 239 (U.C.C.)<br>----- | | |
| | | | **TECHNICAL FIELDS SEARCHED (Int. Cl.4)** |
| | | | C 08 G<br>C 09 J<br>B 32 B |

The present search report has been drawn up for all claims

| Place of search | Date of completion of the search | Examiner |
|---|---|---|
| THE HAGUE | 19-12-1984 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82